# EUROPÄISCHE PATENTSCHRIFT

(11) **EP 1 047 868 B1**
(45) Veröffentlichungstag und Bekanntmachung des Hinweises auf die Patenterteilung: **21.11.2001**
(21) Anmeldenummer: 99960890.4
(22) Anmeldetag: 11.11.1999
(51) Int. Cl.: F02D 41/30, B60K 41/06

(54) **VERFAHREN ZUM BETREIBEN EINER BRENNKRAFTMASCHINE INSBESONDERE EINES KRAFTFAHRZEUGS**
METHOD FOR OPERATING AN INTERNAL COMBUSTION ENGINE, ESPECIALLY FOR A MOTOR VEHICLE
MODE DE FONCTIONNEMENT D'UN MOTEUR THERMIQUE, NOTAMMENT DE VEHICULE

(30) Priorität: 14.11.1998 DE 19852600
(43) Veröffentlichungstag der Anmeldung: 02.11.2000
(73) Patentinhaber: ROBERT BOSCH GMBH, 70442 Stuttgart (DE)
(72) Erfinder: GROB, Ferdinand, D-74354 Besigheim (DE); MAIENBERG, Uwe, D-71229 Leonberg (DE)
(86) Internationale Anmeldenummer: DE9903587
(87) Internationale Veröffentlichungsnummer: WO0029736

(56) Entgegenhaltungen:
- EP-A- 0 829 623
- EP-A- 0 860 594
- EP-A- 0 888 921
- US-A- 5 472 673
- PATENT ABSTRACTS OF JAPAN vol. 1996, no. 12, 26. Dezember 1996 (1996-12-26) & JP 08 200045 A (TOYOTA MOTOR CORP), 6. August 1996 (1996-08-06)

## Beschreibung

### Stand der Technik

Die Erfindung betrifft ein Verfahren zum Betreiben einer Brennkraftmaschine insbesondere eines Kraftfahrzeugs, bei dem der für eine Verbrennung einzuspritzende Kraftstoff in einer ersten Betriebsart während einer Ansaugphase und in einer zweiten Betriebsart während einer Verdichtungsphase direkt in einen Brennraum eines Zylinders eingespritzt und in beiden Betriebsarten danach entzündet wird, und bei dem bei der Verbrennung entstehende Stickoxide in einem Katalysator gespeichert werden. Ebenfalls betrifft die Erfindung eine Brennkraftmaschine insbesondere für ein Kraftfahrzeug, mit einem Einspritzventil, mit dem der für eine Verbrennung einzuspritzende Kraftstoff in einer ersten Betriebsart während einer Ansaugphase und in einer zweiten Betriebsart während einer Verdichtungsphase direkt in einen Brennraum eines Zylinders einspritzbar ist, mit einer Zündkerze, mit der in beiden Betriebsarten der eingespritzte Kraftstoff entzündbar ist, mit einem Katalysator zur Speicherung von bei der Verbrennung entstehenden Stickoxiden, und mit einem Steuergerät zur Steuerung und/oder Regelung der Betriebsgrößen der Brennkraftmaschine in den beiden Betriebsarten.

Systeme zur direkten Einspritzung von Kraftstoff in den Brennraum einer Brennkraftmaschine sind allgemein bekannt.

Bei diesen Systemen, siehe z.B. EP-A-0 829 623, wird als erste Betriebsart ein sogenannter Homogenbetrieb und als zweite Betriebsart ein sogenannter Schichtladungsbetrieb oder kurz Schichtbetrieb unterschieden. Der Schichtbetrieb wird insbesondere bei kleineren und mittleren Lasten verwendet, während der Homogenbetrieb bei größeren, an der Brennkraftmaschine anliegenden Lasten zur Anwendung kommt.

Im Schichtbetrieb wird der Kraftstoff während der Verdichtungsphase der Brennkraftmaschine in den Brennraum derart eingespritzt, daß sich im Zeitpunkt der Zündung eine Kraftstoffwolke in unmittelbarer Umgebung einer Zündkerze befindet. Diese Einspritzung kann auf unterschiedliche Weise erfolgen. So ist es möglich, daß die eingespritzte Kraftstoffwolke sich bereits während bzw. unmittelbar nach der Einspritzung bei der Zündkerze befindet und von dieser entzündet wird. Ebenfalls ist es möglich, daß die eingespritzte Kraftstoffwolke durch eine Ladungsbewegung zu der Zündkerze geführt und dann erst entzündet wird. Bei beiden Brennverfahren liegt keine gleichmäßige Kraftstoffverteilung vor, sondern eine Schichtladung.

Der Vorteil des Schichtbetriebs liegt darin, daß dort mit einer sehr geringen Kraftstoffmenge die anliegenden kleineren und mittleren Lasten von der Brennkraftmaschine ausgeführt werden können. Größere Lasten können allerdings nicht durch den Schichtbetrieb erfüllt werden.

Im für derartige größere Lasten vorgesehenen Homogenbetrieb wird der Kraftstoff während der Ansaugphase der Brennkraftmaschine eingespritzt, so daß eine Verwirbelung und damit eine Verteilung des Kraftstoffs in dem Brennraum noch ohne weiteres erfolgen kann. Insoweit entspricht der Homogenbetrieb etwa der Betriebsweise von Brennkraftmaschinen, bei denen in herkömmlicher Weise Kraftstoff in das Ansaugrohr eingespritzt wird. Bei Bedarf kann auch bei kleineren und mittleren Lasten der Homogenbetrieb eingesetzt werden.

Im Schichtbetrieb wird die Drosselklappe in dem zu dem Brennraum führenden Ansaugrohr weit geöffnet und die Verbrennung wird im wesentlichen nur durch die einzuspritzende Kraftstoffmasse gesteuert und/oder geregelt. Im Homogenbetrieb wird die Drosselklappe in Abhängigkeit von dem angeforderten Moment geöffnet bzw. geschlossen und die einzuspritzende Kraftstoffmasse wird in Abhängigkeit von der angesaugten Luftmasse gesteuert und/oder geregelt.

In beiden Betriebsarten, also im Schichtbetrieb und im Homogenbetrieb, werden die Betriebsgrößen für die Einspritzung von Kraftstoff, also beispielsweise die Einspritzdauer und der Einspritzbeginn, und die Betriebsgrößen für die Entzündung des eingespritzten Kraftstoffs, also beispielsweise der Zündzeitpunkt, in Abhängigkeit von einer Mehrzahl weiterer Betriebsgrößen der Brennkraftmaschine auf einen im Hinblick auf Kraftstoffeinsparung, Abgasreduzierung und dergleichen optimalen Wert gesteuert und/oder geregelt. Die Steuerung und/oder Regelung ist dabei in den beiden Betriebsarten unterschiedlich.

Zwangsläufig ist es erforderlich, daß zwischen den beiden Betriebsarten der Brennkraftmaschine, also dem Homogenbetrieb und dem Schichtbetrieb hin- und hergeschaltet wird. Dabei ist es erforderlich, daß diese Umschaltungen möglichst ruckfrei erfolgen.

Zur Verminderung von Schadstoffemissionen werden die entstehenden Abgase katalytisch behandelt. Hierzu ist üblicherweise ein Dreiwege-Katalysator vorgesehen, mit dem HC- und CO-Verbindungen oxidiert und NOx-Verbindungen reduziert werden können. Die letztgenannten Stickoxide entstehen insbesondere während des Schichtbetriebs. In diesem Betriebszustand ist jedoch aufgrund des mageren Luft/Kraftstoff-Gemisches ein Sauerstoffüberschuß vorhanden, so daß die Stickoxide in dem Dreiwege-Katalysator nicht vollständig reduziert werden können.

Aus diesem Grund ist zumeist ein zusätzlicher Speicherkatalysator dem Dreiwege-Katalysator zugeordnet, in dem die Stickoxide zwischengespeichert werden können.
Aufgrund der begrenzten Speicherkapazität des Speicherkatalysators muß dieser wieder entladen bzw. ausgeräumt werden. Dies erfolgt während des Homogenbetriebs der Brennkraftmaschine. Aufgrund des fetten Luft/Kraftstoff-Gemischs besteht während des Homogenbetriebs ein Sauerstoffmangel. Dieser hat zur Folge, daß die gespeicherten Stickoxide von dem Speicherkatalysator freigegeben und von dem Dreiwege-Katalsyator reduziert werden können.

Es ist somit für einen schadstoffarmen Schichtbetrieb der Brennkraftmaschine erforderlich, daß der Speicherkatalysator nicht vollständig beladen bzw. rechtzeitig entladen und damit nicht überladen wird.

Aufgabe der Erfindung ist es, ein Verfahren zum Betreiben einer Brennkraftmaschine sowie eine Brennkraftmaschine zu schaffen, bei denen eine erforderliche Entladung des Speicherkatalysators komfortabler durchgeführt wird.

Diese Aufgabe wird bei einem Verfahren der eingangs genannten Art erfindungsgemäß dadurch gelöst, daß ein Gangwechsel in eine andere Gangstufe bzw. einen anderen Übersetzungsbereich und eine Umschaltung in die erste Betriebsart etwa gleichzeitig durchgeführt werden, wobei die Umschaltung in die erste Betriebsart zur Entladung der in dem Katalysator gespeicherten Stickoxide vorgesehen ist. Bei einer Brennkraftmaschine der eingangs genannten Art wird die Aufgabe erfindungsgemäß dadurch gelöst, daß durch das Steuergerät ein Gangwechsel in eine andere Gangstufe und eine Umschaltung in die erste Betriebsart etwa gleichzeitig durchführbar sind, wobei die Umschaltung in die erste Betriebsart zur Entladung der in dem Katalysator gespeicherten Stickoxide vorgesehen ist.

Es wird also bei einem Gangwechsel etwa gleichzeitig eine Betriebsartumschaltung in den Homogenbetrieb durchgeführt. Dies hat zweierlei Vorteile. Einerseits wird durch den Homogenbetrieb erreicht, daß der Speicherkatalysator entladen wird. Damit wird gleichzeitig eine Überladung des Speicherkatalysators vermieden. Eine Abgabe von Stickoxiden an die Umwelt findet somit nicht statt. Andererseits wird durch den Gangwechsel erreicht, daß ein möglicherweise aufgrund des Betriebsartenwechsels entstehender Ruck der Brennkraftmaschine überdeckt wird. Die Wahrnehmbarkeit eines derartigen Rucks wird also durch den Gangwechsel weitgehend minimiert. Die Brennkraftmaschine weist damit einen ruhigen und gleichmäßigen Lauf auch bei einem Betriebsartenwechsel auf.

Bei einer vorteilhaften Ausgestaltung der Erfindung, bei der der Gangwechsel erforderlich ist, bei der für den Gangwechsel an sich keine Umschaltung in die erste Betriebsart erforderlich ist, bei der der Katalysator jedoch beladen ist, wird etwa gleichzeitig mit dem Gangwechsel in die erste Betriebsart umgeschaltet, um den Katalysator zu entladen. In diesem Fall ist ein Gangwechsel erforderlich, ein Betriebsartwechsel jedoch an sich nicht. Zum Entladen des Speicherkatalysators wird jedoch während des Gangwechsel in den Homogenbetrieb umgeschaltet. Damit wird einerseits eine Überladung des Speicherkatalysators vermieden. Andererseits wird ein ruckfreier Betriebsartwechsel erreicht.

Bei einer anderen vorteilhaften Ausgestaltung der Erfindung, bei der der Gangwechsel erforderlich ist, bei der für den Gangwechsel an sich keine Umschaltung in die erste Betriebsart erforderlich ist, bei der der Katalysator an sich noch nicht bzw. wenig beladen ist, wird trotzdem etwa gleichzeitig mit dem Gangwechsel in die erste Betriebsart umgeschaltet, um den Katalysator zu entladen. Dies stellt eine vorbeugende Entladung des Speicherkatalysators dar. Obwohl der Speicherkatalysator an sich noch nicht bzw. nur wenig beladen ist, wird er vorab oder vorausschauend bereits wieder entladen. Auf diese Weise wird eine Überladung des Speicherkatalysators sicher vermieden.

Bei einer weiteren vorteilhaften Ausgestaltung der Erfindung, bei der der Katalysator beladen ist, bei der deshalb in die erste Betriebsart umgeschaltet wird, um den Katalysator zu entladen, bei der der Gangwechsel an sich nicht erforderlich ist, wird trotzdem etwa gleichzeitig mit dem Umschalten in die erste Betriebsart der Gangwechsel durchgeführt. Dies stellt den umgekehrten Fall dar. Der Gangwechsel ist an sich nicht erforderlich, jedoch möglich und sinnvoll. Das Entladen des Speicherkatalysators ist hingegen notwendig. Damit ein möglicherweise auftretender Ruck bei dem durchzuführenden Betriebsartwechsel möglichst nicht spürbar ist, wird etwa gleichzeitig mit der Umschaltung in den Homogenbetrieb ein Gangwechsel durchgeführt.

Besonders vorteilhaft ist es, wenn der Gangwechsel in eine andere Gangstufe ersetzt wird durch eine Abschaltung eines oder mehrerer Zylinder der Brennkraftmaschine. Die vorstehend beschriebenen Verfahren und Funktionen werden also nicht mehr im Zusammenhang mit einem Gangwechsel in eine andere Gangstufe durchgeführt, sondern es wird stattdessen zumindest einer der Zylinder der Brennkraftmaschine abgeschaltet. Eine derartige Zylinderabschaltung hat zur Folge, daß die anderen Zylinder eine höhere Leistung erbringen müssen. Dazu ist es erforderlich, die anderen Zylinder andersartig zu steuern und/oder zu regeln. Dieser Übergang zu der höheren Leistung wird dann erfindungsgemäß dazu verwendet, von dem Schichtbetrieb in den Homogenbetrieb zu schalten. Auf diese Weise wird einerseits erreicht, daß durch den Homogenbetrieb der Speicherkatalysator entladen wird. Andererseits wird durch die Zylinderabschaltung erreicht, daß ein möglicherweise bei der Betriebsartenumschaltung entstehender Ruck für einen Fahrer des Kraftfahrzeugs kaum noch spürbar ist.

Von besonderer Bedeutung ist die Realisierung des erfindungsgemäßen Verfahrens in der Form eines Steuerelements, das für ein Steuergerät einer Brennkraftmaschine, insbesondere eines Kraftfahrzeugs, vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Steuerelement abgespeichertes Programm realisiert, so daß dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt eine schematische Darstellung eines Ausführungsbeispiels einer erfindungsgemäßen Brennkraftmaschine,
- Figur 2: zeigt ein schematisches Blockschaltbild eines Ausführungsbeispiels eines erfindungsgemäßen Verfahrens zum Betreiben der Brennkraftmaschine der Figur 1,
- Figur 3: zeigt ein schematisches Diagramm zur Erläuterung des Verfahrens nach der Figur 2 bei einem Gangwechsel, und
- Figur 4: zeigt eine schematisches Diagramm zur Erläuterung des Verfahrens nach der Figur 2 bei einer Zylinderabschaltung.

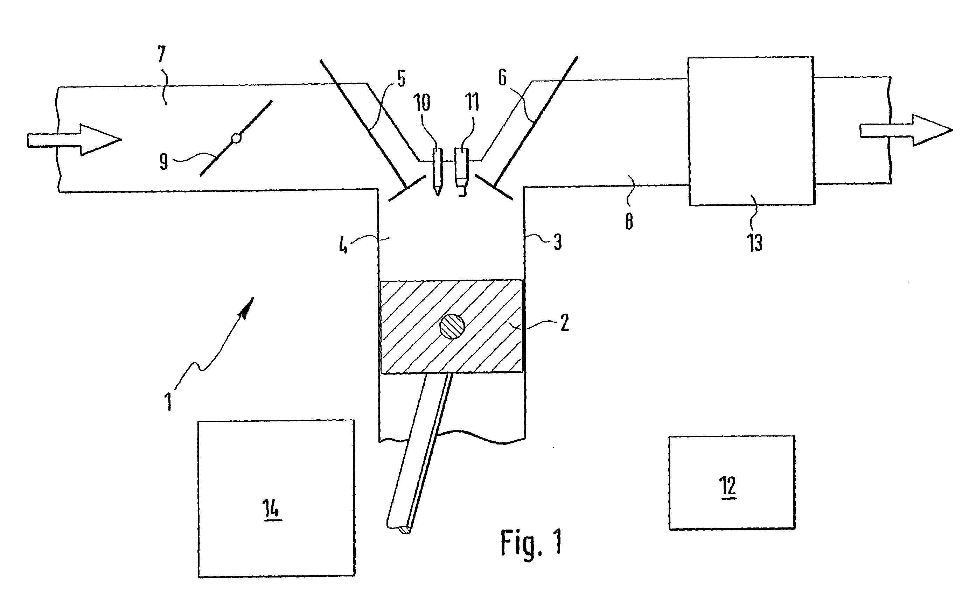

In der Figur 1 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein oder mehrere Einlaßventile 5 und ein oder mehrere Auslaßventile 6 begrenzt ist. Mit dem Einlaßventil 5 ist ein Ansaugrohr 7 und mit dem Auslaßventil 6 ist ein Abgasrohr 8 gekoppelt.

In dem Ansaugrohr 7 ist eine drehbare Drosselklappe 9 untergebracht, über die dem Ansaugrohr 7 Luft zuführbar ist. Die Menge der zugeführten Luft ist abhängig von der Winkelstellung der Drosselklappe 9.

Dem Zylinder 3 ist ein Einspritzventil 10 zugeordnet, mit dem Kraftstoff in den Brennraum 4 der Brennkraftmaschine 1 eingespritzt werden kann. Ebenfalls ist eine Zündkerze 11 dem Zylinder 3 zugeordnet, mit der der eingespritzte Kraftstoff entzündet werden kann.

Der hin- und herbewegbare Kolben 2 wird auf eine nichtdargestellte Kurbelwelle übertragen und versetzt diese in eine Drehbewegung.

In einer ersten Betriebsart, einem sogenannten Homogenbetrieb der Brennkraftmaschine 1, wird die Drosselklappe 9 in Abhängigkeit von der erwünschten, zugeführten Luftmasse teilweise geöffnet bzw. geschlossen. Der Kraftstoff wird von dem Einspritzventil 10 während einer durch den Kolben 2 hervorgerufenen Ansaugphase in den Brennraum 4 eingespritzt. Durch die gleichzeitig angesaugte Luft wird der eingespritzte Kraftstoff verwirbelt und damit in dem Brennraum 4 im wesentlichen gleichmäßig verteilt. Danach wird das Kraftstoff/Luft-Gemisch während der Verdichtungsphase verdichtet, um dann von der Zündkerze 11 entzündet zu werden. Durch die Ausdehnung des entzündeten Kraftstoffs wird der Kolben 2 angetrieben.

In einer zweiten Betriebsart, einem sogenannten Schichtbetrieb der Brennkraftmaschine 1, wird die Drosselklappe 9 weit geöffnet. Der Kraftstoff wird von dem Einspritzventil 10 während einer durch den Kolben 2 hervorgerufenen Verdichtungsphase in den Brennraum 4 eingespritzt, und zwar örtlich in die unmittelbare Umgebung der Zündkerze 11 sowie zeitlich in geeignetem Abstand vor dem Zündzeitpunkt. Dann wird mit Hilfe der Zündkerze 11 der Kraftstoff entzündet, so daß der Kolben 2 in der nunmehr folgenden Arbeitsphase durch die Ausdehnung des entzündeten Kraftstoffs angetrieben wird.

Die im Schichtbetrieb und im Homogenbetrieb von dem Einspritzventil 10 in den Brennraum 4 eingespritzte Kraftstoffmasse wird von einem Steuergerät 12 insbesondere im Hinblick auf einen geringen Kraftstoffverbrauch und/oder eine geringe Schadstoffentwicklung gesteuert und/oder geregelt. Zu diesem Zweck ist das Steuergerät 12 mit einem Mikroprozessor versehen, der in einem Speichermedium, insbesondere in einem Read-Only-Memory ein Programm abgespeichert hat, das dazu geeignet ist, die genannte Steuerung und/oder Regelung durchzuführen.

Das Steuergerät 12 ist von Eingangssignalen beaufschlagt, die mittels Sensoren gemessene Betriebsgrößen der Brennkraftmaschine 1 darstellen. Beispielsweise ist das Steuergerät mit einem Luftmassensensor, einem Lambda-Sensor und einem Drehzahlsensor verbunden. Des weiteren ist das Steuergerät 12 mit einem Fahrpedalsensor verbunden, der ein Signal erzeugt, das die Stellung eines von einem Fahrer betätigbaren Fahrpedals angibt. Das Steuergerät 12 erzeugt Ausgangssignale, mit denen über Aktoren das Verhalten der Brennkraftmaschine 1 entsprechend der erwünschten Steuerung und/oder Regelung beeinflußt werden kann. Beispielsweise ist das Steuergerät mit dem Einspritzventil 10, der Zündkerze 11 und der Drosselklappe 9 verbunden und erzeugt die zu deren Ansteuerung erforderlichen Signale.

In dem Abgasrohr 8 der Brennkraftmaschine 1 ist ein Katalysator 13 enthalten, der einen Oxidationskatalysator zur Oxidation von HC- und CO-Verbindungen, einen Reduktionskatalysator zur Reduktion von NOx-Verbindungen und einen Speicherkatalysator zur Speicherung von NOx-Verbindungen aufweist.

In dem Schichtbetrieb ist ein mageres Luft/Kraftstoff-Gemisch vorhanden, so daß ein Sauerstoffüberschuß existiert. Dieser überschüssige Sauerstoff wird von dem Reduktionskatalysator aufgenommen, so daß dieser keine Stickoxide mehr reduzieren kann. Damit die NOx-Verbindungen nicht an die Umwelt abgegeben werden, ist der Speicherkatalysator vorgesehen. Dieser speichert die im Schichtbetrieb entstehenden NOx-Verbindungen. Dies stellt einen Beladevorgang des Speicherkatalysators dar. Die HC- und CO-Verbindungen werden von dem Oxidationskatalysator oxidiert.

In dem Homogenbetrieb kann ein fettes Luft/Kraftstoff-Gemisch vorhanden sein, so daß ein Sauerstoffmangel existiert. Aufgrund des fehlenden Sauerstoffs kann der Reduktionskatalysator den NOx-Verbindungen den Sauerstoff entziehen. Diese werden somit von dem Speicherkatalysator abgegeben und von dem Reduktionskatalysator reduziert. Dies stellt einen Entladevorgang bzw. ein Ausräumen des Speicherkatalysators dar. Die HC- und CO-Verbindungen werden weiterhin von dem Oxidationskatalysator oxidiert.

Die Speicherkapazität des Speicherkatalysators ist begrenzt. Der Beladevorgang kann daher nur für eine bestimmte Zeitdauer erfolgen. Danach muß der Speicherkatalysator wieder entladen werden. Würde der Schichtbetrieb ohne eine Entladung fortgesetzt werden, obwohl der Speicherkatalysator vollständig aufgeladen ist, so hätte dies zur Folge, daß Stickoxide an die Umwelt abgegeben werden würden.

Der Brennkraftmaschine 1 ist ein automatisches Getriebe 14 zugeordnet, beispielsweise ein sogenannter Stufenautomat oder dergleichen. Die Schaltvorgänge des automatischen Getriebes 14 werden von dem Steuergerät 12 gesteuert und/oder geregelt. Das automatische Getriebe 14 kann somit von dem Steuergerät 12 zu einem Gangwechsel in eine höhere oder eine niedrigere Gangstufe veranlaßt werden.

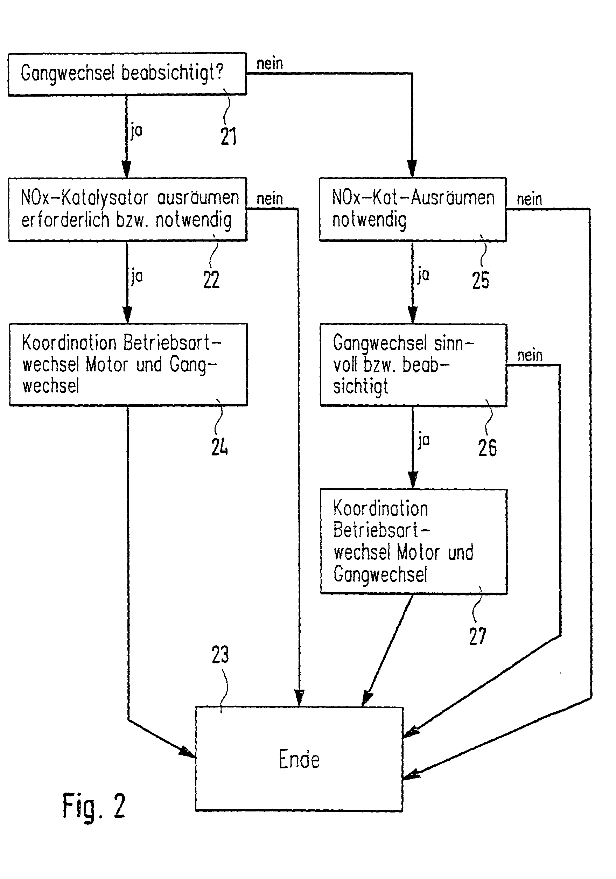

Von dem Steuergerät 12 wird das nachfolgend anhand der Figuren 2 bis 4 beschriebene Verfahren zum Betreiben der Brennkraftmaschine 1 ausgeführt, mit dem eine Überladung des Speicherkatalysators vermieden wird, und mit dem der zum Entladen des Speicherkatalysators erforderliche Wechsel der Betriebsart möglichst komfortabel durchgeführt wird.

In der Figur 2 ist ein Verfahren beschrieben, mit dem ein Gangwechsel in eine andere Gangstufe des Getriebes 14 und eine Umschaltung in die erste Betriebsart, also in den Homogenbetrieb etwa gleichzeitig durchgeführt werden. Dabei ist die Umschaltung in die erste Betriebsart zur Entladung der in dem Katalysator 13 gespeicherten Stickoxide vorgesehen. Durch die Umschaltung in den Homogenbetrieb und den etwa gleichzeitigen Gangwechsel wird ein möglicher, durch die Betriebsartenumschaltung entstehender Ruck von dem Gangwechsel überdeckt, so daß der Ruck von einem Fahrer des Kraftfahrzeugs kaum mehr wahrgenommen wird.

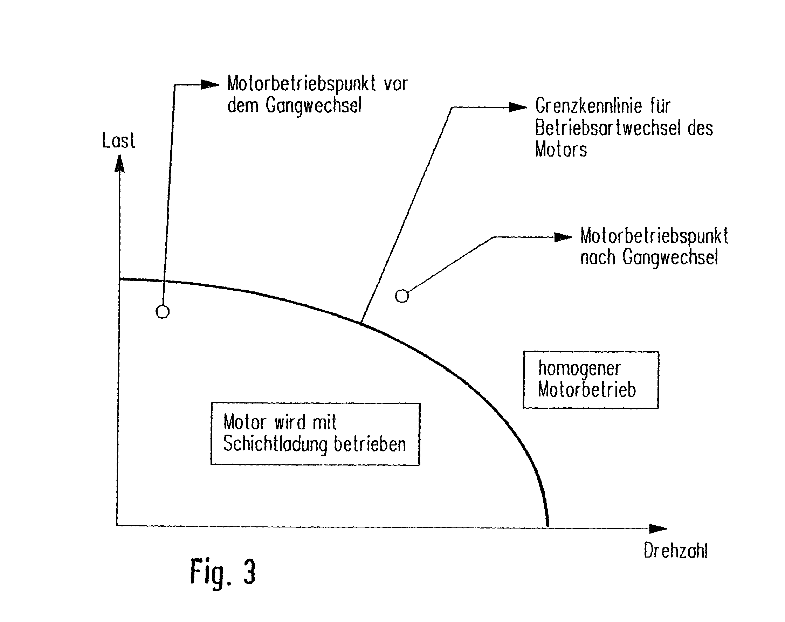

In der Figur 3 sind der Gangwechsel und der etwa gleichzeitig durchgeführte Betriebsartenwechsel nochmals in einem Diagramm dargestellt. In dem Diagramm ist die an der Brennkraftmaschine 1 anliegende Last über der Drehzahl der Brennkraftmaschine 1 aufgetragen. Vor dem Gangwechsel liegt der Motorbetriebspunkt in einem Bereich des Diagramms, in dem der Motor in der zweiten Betriebsart, dem Schichtbetrieb betrieben wird. Etwa gleichzeitig mit dem Gangwechsel findet ein Betriebsartwechsel statt. Der Motorbetriebspunkt liegt daher nach dem Gangwechsel in einem Bereich des Diagramms, in dem der Motor in der ersten Betriebsart, dem Homogenbetrieb betrieben wird.

Hierzu wird von dem Steuergerät 12 gemäß der Figur 2 in einem Schritt 21 geprüft, ob ein Gangwechsel vorgesehen oder erforderlich ist. Ist dies der Fall, so wird in einem Schritt 22 von dem Steuergerät 12 geprüft, ob es erforderlich oder notwendig ist, den Speicherkatalysator zu entladen. Dies ist dann der Fall, wenn der Speicherkatalysator vollständig beladen ist.

Ist der Speicherkatalysator nicht vollständig beladen, und ist somit eine Entladung des Speicherkatalysators nicht erforderlich, so wird das Verfahren mit: einem Block 23 beendet.

Ist der Speicherkatalysator hingegen vollständig beladen, und ist es deshalb erforderlich, den Speicherkatalysator zu entladen, so wird von dem Steuergerät 12 in einem Schritt 24 der erforderliche Gangwechsel etwa gleichzeitig mit einer Umschaltung in den Homogenbetrieb durchgeführt. Die Umschaltung in die erste Betriebsart wird dabei auch dann durchgeführt, wenn sie an sich im Hinblick auf die Steuerung und/oder Regelung der beiden Betriebsarten nicht erforderlich wäre. Durch den nunmehr nachfolgenden Homogenbetrieb wird der Speicherkatalysator entladen. Durch den gleichzeitigen Gangwechsel wird die Wahrnehmbarkeit eines möglichen Rucks während der Umschaltung in den Homogenbetrieb vermindert.

Zusätzlich kann der Schritt 24 auch dann durchgeführt werden, wenn eine Entladung des Speicherkatalysators an sich noch nicht erforderlich wäre, wenn der Speicherkatalysator also an sich noch nicht vollständig beladen ist. In diesem Fall kann trotzdem etwa gleichzeitig mit dem Gangwechsel eine Umschaltung in den Homogenbetrieb erfolgen, um den Speicherkatalysator vorab bzw. vorausschauend zu entladen.

Wird in dem Schritt 21 von dem Steuergerät 12 festgestellt, daß kein Gangwechsel vorgesehen oder erforderlich ist, so wird in einem Schritt 25 von dem Steuergerät 12 geprüft, ob es notwendig oder erforderlich ist, daß der Speicherkatalysator entladen wird. Dies ist dann der Fall, wenn der Speicherkatalysator vollständig beladen ist.

Ist dies nicht der Fall, so wird das Verfahren mit dem Block 23 beendet.

Ist es jedoch erforderlich, den Speicherkatalysator zu entladen, so wird in einem Schritt 26 von dem Steuergerät 12 geprüft, ob ein Gangwechsel momentan beabsichtigt bzw. erforderlich ist oder ob ein Gangwechsel zumindest sinnvoll erscheint.

Ist dies nicht der Fall, so wird das Verfahren wieder mit dem Block 23 beendet.

Ist hingegen ein Gangwechsel beabsichtigt oder zumindest sinnvoll, so wird von dem Steuergerät 12 in einem Schritt 27 der Gangwechsel etwa gleichzeitig mit der erforderlichen Umschaltung in den Homogenbetrieb durchgeführt. Die Umschaltung in die erste Betriebsart wird dabei auch dann durchgeführt, wenn sie an sich im Hinblick auf die Steuerung und/oder Regelung der beiden Betriebsarten nicht erforderlich wäre. Durch den nunmehr nachfolgenden Homogenbetrieb wird der Speicherkatalysator entladen. Durch den gleichzeitigen Gangwechsel wird die Wahrnehmbarkeit eines möglichen Rucks während der Umschaltung in den Homogenbetrieb vermindert.

Es ist möglich, den beschriebenen, von dem Getriebe 14 ausgeführten Gangwechsel in eine andere Gangstufe durch eine Abschaltung eines oder mehrerer Zylinder 3 der Brennkraftmaschine 1 zu ersetzen. Bei einer derartigen Zylinderabschaltung wird das Einspritzventil 10 des oder der abzuschaltenden Zylinder 3 nicht mehr angesteuert. Entsprechend muss die Zündkerze 11 nicht mehr zwingend betätigt werden. Die von der Brennkraftmaschine 1 angefordete Leistung muß dann von den übrigen Zylindern 3 erbracht werden. Hierzu müssen diese anderen Zylinder 3 der Brennkraftmaschine 1 andersartig gesteuert und/oder geregelt werden, um die höhere Leistung zu erbringen.

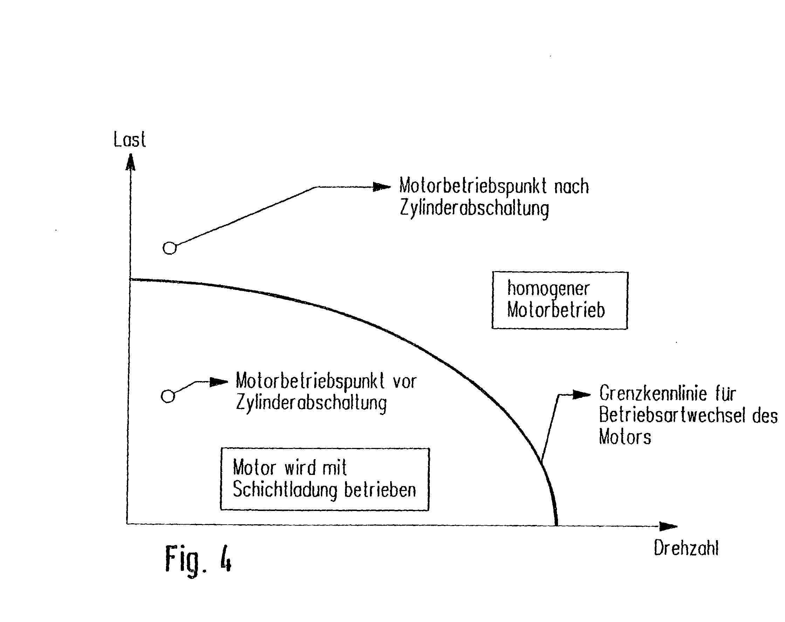

In der Figur 4 sind eine Zylinderabschaltung und ein etwa gleichzeitig durchgeführte Betriebsartenwechsel in einem Diagramm dargestellt. In dem Diagramm ist die an der Brennkraftmaschine 1 anliegende Last über der Drehzahl der Brennkraftmaschine 1 aufgetragen. Vor der Zylinderabschaltung liegt der Motorbetriebspunkt in einem Bereich des Diagramms, in dem der Motor in der zweiten Betriebsart, also dem Schichtbetrieb betrieben wird. Etwa gleichzeitig mit der Zylinderabschaltung findet ein Betriebsartwechsel statt. Der Motorbetriebspunkt liegt daher nach der Zylinderabschaltung in einem Bereich des Diagramms, in dem der Motor in der ersten Betriebsart, dem Homogenbetrieb betrieben wird. Dort sind die nunmehr noch aktiv beteiligten Zylinder 3 der Brennkraftmaschine 1 aufgrund des homogenen Luft/Kraftstoff-Gemischs des Homogenbetriebs in der Lage, die erforderliche erhöhte Leistung zu erbringen. Gleichzeitig wird durch den Homogenbetrieb - wie im Zusammenhang mit einem Gangwechsel beschrieben - der Speicherkatalysator entladen. Durch die etwa gleichzeitige Zylinderabschaltung und Betriebsartenumschaltung wird die Wahrnehmbarkeit eines möglichen Rucks während der Umschaltung in den Homogenbetrieb vermindert.

## Patentansprüche

1. Verfahren zum Betreiben einer Brennkraftmaschine (1) insbesondere eines Kraftfahrzeugs, bei dem der für eine Verbrennung einzuspritzende Kraftstoff in einer ersten Betriebsart während einer Ansaugphase und in einer zweiten Betriebsart während einer Verdichtungsphase direkt in einen Brennraum (4) eines Zylinders (3) eingespritzt und in beiden Betriebsarten danach entzündet wird, und bei dem bei der Verbrennung entstehende Stickoxide in einem Katalysator (13) gespeichert werden, **dadurch gekennzeichnet, daß** ein Gangwechsel in eine andere Gangstufe bzw. einen anderen Übersetzungsbereich und eine Umschaltung in die erste Betriebsart etwa gleichzeitig durchgeführt werden, wobei die Umschaltung in die erste Betriebsart zur Entladung der in dem Katalysator (13) gespeicherten Stickoxide vorgesehen ist.

2. Verfahren nach Anspruch 1, **dadurch gekennzeichnet, daß** der Gangwechsel erforderlich ist, daß für den Gangwechsel an sich keine Umschaltung in die erste Betriebsart erforderlich ist, daß der Katalysator (13) jedoch beladen ist, und daß deshalb etwa gleichzeitig mit dem Gangwechsel in die erste Betriebsart umgeschaltet wird, um den Katalysator (13) zu entladen.

3. Verfahren nach Anspruche 1, **dadurch gekennzeichnet, daß** der Gangwechsel erforderlich ist, daß für den Gangwechsel an sich keine Umschaltung in die erste Betriebsart erforderlich ist, daß der Katalysator (13) an sich noch nicht bzw. wenig beladen ist, daß aber trotzdem etwa gleichzeitig mit dem Gangwechsel in die erste Betriebsart umgeschaltet wird, um den Katalysator (13) zu entladen.

4. Verfahren nach Anspruch 1, **dadurch gekennzeichnet, daß** der Katalysator (13) beladen ist, daß deshalb in die erste Betriebsart umgeschaltet wird, um den Katalysator (13) zu entladen, daß der Gangwechsel an sich nicht erforderlich ist, daß aber trotzdem etwa gleichzeitig mit dem Umschalten in die erste Betriebsart der Gangwechsel durchgeführt wird.

5. Verfahren nach einem der vorstehenden Ansprüche, **dadurch gekennzeichnet, daß** der Gangwechsel in eine andere Gangstufe ersetzt wird durch eine Abschaltung eines oder mehrerer Zylinder (3) der Brennkraftmaschine (1).

6. Steuerelement, insbesondere Read-Only-Memory, für ein Steuergerät (12) einer Brennkraftmaschine (1) insbesondere eines Kraftfahrzeugs, auf dem ein Programm abgespeichert ist, das auf einem Rechengerät, insbesondere auf einem Mikroprozessor, ablauffähig und zur Ausführung eines Verfahrens nach einem der Ansprüche 1 bis 5 geeignet ist.

7. Brennkraftmaschine (1) insbesondere für ein Kraftfahrzeug, mit einem Einspritzventil (10), mit dem der für eine Verbrennung einzuspritzende Kraftstoff in einer ersten Betriebsart während einer Ansaugphase und in einer zweiten Betriebsart während einer Verdichtungsphase direkt in einen Brennraum (4) eines Zylinders (3) einspritzbar ist, mit einer Zündkerze (11), mit der in beiden Betriebsarten der eingespritzte Kraftstoff entzündbar ist, mit einem Katalysator (13) zur Speicherung von bei der Verbrennung entstehenden Stickoxiden, und mit einem Steuergerät (12) zur Steuerung und/oder Regelung der Betriebsgrößen der Brennkraftmaschine (1) in den beiden Betriebsarten, **dadurch gekennzeichnet, daß** durch das Steuergerät (12) ein Gangwechsel in eine andere Gangstufe und eine Umschaltung in die erste Betriebsart etwa gleichzeitig durchführbar sind, wobei die Umschaltung in die erste Betriebsart zur Entladung der in dem Katalysator (13) gespeicherten Stickoxide vorgesehen ist.

## Claims

1. Method for operating an internal combustion engine (1), in particular of a motor vehicle, in which the fuel to be injected for combustion is injected directly into a combustion space (4) of a cylinder (3) during an intake phase in a first operating mode and during a compression phase in a second operating mode and is thereafter ignited in both operating modes, and in which nitrogen oxides occurring during combustion are stored in a catalytic converter (13), **characterized in that** a gear change into another gear stage or another transmission range and a changeover to the first operating mode are carried out approximately simultaneously, the changeover to the first operating mode being provided for discharging the nitrogen oxides stored in the catalytic converter (13).

2. Method according to Claim 1, **characterized in that** the gear change is necessary, **in that** no changeover to the first operating mode is necessary per se for the gear change, **in that** the catalytic converter (13) is, however, charged, and **in that** there is therefore a changeover to the first operating mode approximately simultaneously with the gear change, in order to discharge the catalytic converter (13).

3. Method according to Claim 1, **characterized in that** the gear change is necessary, **in that** no changeover to the first operating mode is necessary per se for the gear change, **in that** the catalytic converter (13) is per se not yet or only a little charged, but **in that** there is nevertheless a changeover to the first operating mode approximately simultaneously with the gear change, in order to discharge the catalytic converter (13).

4. Method according to Claim 1, **characterized in that** the catalytic converter (13) is charged, **in that** there is therefore a changeover to the first operating mode, in order to discharge the catalytic converter (13), **in that** the gear change is not necessary per se, but **in that** the gear change is nevertheless carried out approximately simultaneously with the changeover to the first operating mode.

5. Method according to one of the preceding claims, **characterized in that** the gear change into another gear stage is replaced by a cut-off of one or more cylinders (3) of the internal combustion engine (1).

6. Control element, in particular read-only memory, for a control unit (12) of an internal combustion engine (1), in particular of a motor vehicle, on which a program is stored, which is executable on a computer, in particular on a microprocessor, and is suitable for carrying out a method according to one of Claims 1 to 5.

7. Internal combustion engine (1), in particular for a motor vehicle, with an injection valve (10), by means of which the fuel to be injected for combustion can be injected directly into a combustion space (4) of a cylinder (3) during an intake phase in a first operating mode and during a compression phase in a second operating mode, with a spark plug (11), by means of which the injected fuel can be ignited in both operating modes, with a catalytic converter (13) for the storage of nitrogen oxides occurring during combustion, and with a control unit (12) for controlling and/or regulating the operating variables of the internal combustion engine (1) in both operating modes, **characterized in that** a gear change into another gear stage and a changeover to the first operating mode can be carried out approximately simultaneously by means of the control unit (12), the changeover to the first operating mode being provided for discharging the nitrogen oxides stored in the catalytic converter (13).

## Revendications

1. Procédé de mise en oeuvre d'un moteur thermique (1) notamment d'un véhicule automobile, selon lequel le carburant nécessaire à une combustion est injecté dans un premier mode de fonctionnement pendant une phase d'aspiration et dans un second mode de fonctionnement pendant une phase de compression, directement dans la chambre de combustion (4) d'un cylindre (3) et est allumé ensuite dans les deux modes de fonctionnement, les oxydes d'azote engendrés par la combustion étant stockés dans un catalyseur (13),
**caractérisé en ce qu'**
- on effectue un changement de rapport vers un autre rapport de vitesses ou dans une autre plage de transmission et on commute dans le premier mode de fonctionnement, pratiquement simultanément,
- la commutation vers le premier mode de fonctionnement assurant la décharge des oxydes d'azote accumulés dans le catalyseur (13).

2. Procédé selon la revendication 1,
**caractérisé en ce que**
pour décharger le catalyseur (13),
- le changement de rapport de vitesses est nécessaire,
- pour le changement de rapport, il n'est pas nécessaire de commuter vers le premier mode de fonctionnement,
- le catalyseur (13) est néanmoins chargé, et
- c'est pourquoi, sensiblement en même temps que le changement de rapport, on commute vers le premier mode de fonctionnement.

3. Procédé selon la revendication 1,
**caractérisé en ce que**
pour décharger le catalyseur (13),
- le changement de rapport de vitesses est nécessaire,
- pour le changement de rapport de vitesses, il n'est pas nécessaire de commuter dans le premier mode de fonctionnement,
- le catalyseur (13) n'est pas encore chargé ou est faiblement chargé,
- et néanmoins, sensiblement en même temps que le changement de rapport, on commute vers le premier mode de fonctionnement.

4. Procédé selon la revendication 1,
**caractérisé en ce que**
- le catalyseur (13) est chargé et on commute pour cette raison vers le premier mode de fonctionnement pour décharger le catalyseur (13),
- le changement de rapport n'est pas nécessaire en soi, mais néanmoins, on effectue un changement de rapport pratiquement en même temps que l'on commute vers le premier mode de fonctionnement.

5. Procédé selon l'une des revendications précédentes,
**caractérisé en ce que**
le changement de rapport vers un autre rapport de vitesses est remplacé par la coupure d'un ou plusieurs cylindres (3) du moteur thermique (1).

6. Elément de commande, notamment mémoire morte ROM destinée à un appareil de commande (12) d'un moteur thermique (1) notamment d'un véhicule automobile, contenant un programme qui est exécuté par un calculateur notamment un microprocesseur, et qui permet d'exécuter l'un des procédés selon l'une quelconque des revendications 1 à 5.

7. Moteur thermique (1) notamment pour un véhicule automobile, comprenant un injecteur (10) qui injecte le carburant destiné à la combustion dans un premier mode de fonctionnement pendant une phase d'aspiration et dans un second mode de fonctionnement pendant une phase de compression, directement dans la chambre de combustion (4) d'un cylindre (3), une bougie (11) permettant d'allumer le carburant injecté dans l'un ou l'autre des deux modes de fonctionnement, un catalyseur (13) pour stocker les oxydes d'azote engendrés par la combustion et un appareil de commande (12) pour commander et/ou réguler les paramètres de fonctionnement du moteur thermique (1) dans les deux modes de fonctionnement,
**caractérisé en ce que**
l'appareil de commande (12) effectue un changement de rapport vers un autre rapport de vitesses et une commutation vers le premier mode de fonctionnement d'une manière pratiquement simultanée,
la commutation vers le premier mode de fonctionnement étant destinée à décharger les oxydes d'azote accumulés dans le catalyseur (13).
